# EUROPEAN PATENT APPLICATION

(11) **EP 1 755 124 A2**
(43) Date of publication of application: **21.02.2007**
(21) Application number: 06253981.2
(22) Date of filing: 29.07.2006
(51) Int. Cl.: G11B 33/14, H05K 7/20

(54) **Electronic cooling apparatus**

(30) Priority: 17.08.2005 GB 0516813
(71) Applicant: Pace Micro Technology PLC, Saltaire, Shipley, BD14 3LF (GB)
(72) Inventor: Bate, Alan Francis, Idle, Bradford BD10 9JF (GB)
(74) Representative: Tomkinson, Alexandra

(57) **Abstract**

Electronic apparatus is provided including a housing with one or more electronic devices which act as heat sources and a fan provided therein. The fan is arranged to draw air from outside of the housing via one or more inlets such that said air passes over at least one of said electronic devices prior to exiting said housing via one or more outlets. The housing has multiple sides and an inlet is provided on two or more of said sides.

## Description

The present invention relates to the cooling of electronic apparatus and more specifically, although not exclusively, to the air cooling of a hard disk drive.

Hard disk drives (HDDs) are used in a variety of electronic products and are known to create a significant amount of heat during operation. The reliability of a hard disk drive (HDD) is directly related to operating temperature and, in addition, the heat generated by the HDD can adversely affect other surrounding components.

One commonly accepted solution to this problem is to use a fan to force air over the HDD so as to increase the rate at which heat is dissipated by convection. However, particularly in relation to consumer products, there are a number of other internal components which also need to be cooled. This poses a problem to the product designer especially since overall dimensions of the product are preferably to be kept to a minimum and so there is limited space available to allow optimal cooling configurations.

Whilst a number of ways of improving cooling efficiency have been explored in relation to personal computers, the use of HDD's within broadcast data receivers such as set top boxes is now becoming more widespread. This is due to the additional functionality offered by Personal Video Recorders (PVR's) which allow a user to store broadcast data for later viewing.

Operating life test data has shown that increasing the cooling of the HDD by only a few degrees would prevent a significant number of HDD failures, resulting in cost savings for the manufacturer due to fewer field returns and also avoiding inconvenience for the consumer. Thus there is a constant need to improve cooling efficiency and reliability.

Furthermore, it has been found to be a problem that a consumer may inadvertently choose to position a set top box in a location which substantially blocks the inlet or outlet for the cooling airflow. In such a situation an increased strain is placed on the fan and airflow within the housing will tend to recirculate, causing the temperature of the air within the housing to increase, potentially leading to overheating and failure of one or more electronic components.

The present invention aims to provide an improved electronics cooling arrangement so as to reduce the numbers of product failures.

According to a first aspect of the present invention there is provided electronic apparatus, said apparatus including a housing with one or more electronic devices which act as heat sources and a fan provided therein, the fan being arranged to draw air from outside of the housing via one or more inlets such that said air passes over at least one of said electronic devices prior to exiting said housing via one or more outlets, wherein said housing has multiple sides and an inlet is provided on two or more of said sides.

Preferably said inlet extends around a corner of said housing or outer casing so as to allow air to be entrained into said housing from two or more directions. Thus, in one example, a single inlet arrangement extends between at least two sides of the housing. The inlet arrangement is preferably substantially continuous around said corner. In one embodiment the corner is substantially right-angled such that air can enter the housing from two substantially perpendicular directions. Typically the inlet includes a number of apertures or slots and said apertures extend around one or more corners of the outer casing.

The fan can be any powered means via which air is entrained through or into the housing of said apparatus.

The present invention is particularly advantageous in that it allows airflow from one direction to be substantially cut off without starving the fan, thus avoiding dependency for air supply in any one face of the product. Particularly in relation to a consumer electronic product, such as a set top box, the life of the fan will not be seriously affected when the product is incorrectly arranged such that airflow from one direction is inadvertently blocked.

In one embodiment separate inlets are provided on two or more sides of the housing.

According to one embodiment the fan is contained within a fan compartment such that the fan draws air into the fan compartment from outside of the housing via the one or more inlets. The air is preferably drawn directly into the fan compartment through the inlet. Typically the housing includes one or more internal walls defining the fan compartment, said walls isolating the fan from the air within the remainder of the housing. Preferably the fan compartment has one or more external walls provided by the one or more sides of the housing with the inlets therein. In one embodiment, the fan draws air from all external surfaces of the fan compartment. Typically the fan compartment is provided within a corner of the housing. The fan axis may be oriented substantially parallel with, perpendicular to, and/or else at an angle to external walls of the compartment.

The present invention is advantageous in that it provides maximum fan life and the fan is thus housed in its own incoming air stream which will be at the coolest available air, the external ambient air.

The housing may be provided with one or more baffles or baffle means for ducting air leaving the fan compartment over the electronic devices, which may include a hard disk drive. The baffles may be arranged to restrict the cross sectional area of the air flow so as to increase the velocity of the air flow over the HDD. Preferably the air is directed over one side of the HDD prior to entering one or more other chambers within the housing, said chambers containing further electronic components or devices.

According to one embodiment, air direction means or a fin is disposed adjacent one or more sides of the HDD and the surface to the fin or air direction means may be profiled to direct airflow onto the one or more surfaces of the hard disk drive. Preferably the fin or air direction means is generally planar in shape and is provided with a number of oblique formations so as to promote turbulent airflow. The oblique formations may be notches, protruding members or else fingers and these may be punched out of the fin.

In one particular arrangement, the fin or air direction means is thermally conductive and is attached to one or more sides of the hard disk drive so as to function as a heatsink. Preferably the fin or air direction means is U-shaped with straight sides arranged to extend either side of the hard disk drive for contact therewith and a further side arranged to be disposed a short distance from the surface of the hard disk drive within the airflow leaving the fan compartment.

A cowling or partition means may be provided a spaced distance from said side of the hard disk drive such that the fin or air direction means is disposed in the airflow between said cowling or air partition means and the surface of the hard disk drive.

Thus, according to the present invention, a forced airflow can be funnelled into a channel along one side of the hard disk drive and over the fin or air direction means so as to improve cooling by convection. Formations on the fin or air direction means increase the heat transfer through scavenging and trip turbulent flow. The direction of the airflow within the resulting vortices is generally chaotic, causing an increase in the heat energy transferred from the hard disk drive and any associated control electronics.

Typically one or more apertures are provided in a baffle, the apertures opening into one or more compartments within the housing, such that air can be bled from the bulk airflow to cool electronic components within said compartments. The baffle is typically located externally to said fan compartment but associated therewith.

Upon leaving said channel, the air flow may enter into one or more chambers within the housing prior to exiting the housing via one or more outlets provided in the outer casing. The outlets may be provided on two or more sides of the outer casing.

Preferably the electronic apparatus is in the form of a set top box or broadcast data receiver (BDR) capable of receiving digital data from a remote broadcaster and decoding said data to provide video, audio and/or auxiliary data. Set top boxes or BDRs are typically used with television systems.

According to a further aspect of the present invention there is provided an electronics cooling apparatus for a broadcast data receiver, said apparatus including a fan disposed in fluid communication with a hard disk drive, wherein air driven by the fan is ducted or channelled to one or more surfaces of said hard disk drive, said apparatus including a fin or air direction means disposed adjacent said hard disk drive such that the airflow induced by said fan passes over the surface of said hard disk drive and said fin or air direction means.

Typically the broadcast data receiver is arranged for connection to a television set and takes the form of a PVR.

Preferably the fin or air direction means conducts heat away from one or more sides of the HDD in to the induced airflow. Typically the airflow induced by the fan is directed toward substantially one side of said HDD by baffle means extending between the fan and the HDD. However one or more further sides of the hard disk drive may also be fed by the airflow from the fan. In one particular embodiment, one side of the HDD body has an at least partially exposed aluminium portion, including a motor boss, airflow over which increases the flow of heat from the hard drive.

According to a further aspect of the present invention there is provided a method of cooling electronics apparatus, said apparatus including a housing with one or more electronic devices which act as heat sources and a fan provided therein, said method including the steps of drawing air from outside of the housing via one or more inlets using a fan such that said air passes over at least one of said electronic devices prior to exiting said housing via one or more outlets, wherein said housing has multiple sides and an inlet is provided on two or more of said sides to allow air to be drawn into said housing from said two or more sides.

According to a yet further aspect of the present invention there is provided a method of cooling electronics apparatus, said apparatus including a fan disposed in fluid communication with a hard disk drive and said method including the steps of driving air using the fan through a channel or duct to one or more surfaces of the hard disk drive, said apparatus including a fin or air direction means disposed adjacent said hard disk drive such that the driven airflow induced by said fan passes over the surface of said hard disk drive and said fin or air direction means.

Specific embodiments of the invention are now described with reference to the accompanying drawings, wherein:-
Figure 1 is a cross-sectional view of a cooling arrangement according to the present invention;
Figure 2 is a cross-sectional view of an alternative cooling arrangement according to the present invention; and,
Figure 3 is a plan view of a product housing and fan arrangement according to the present invention.

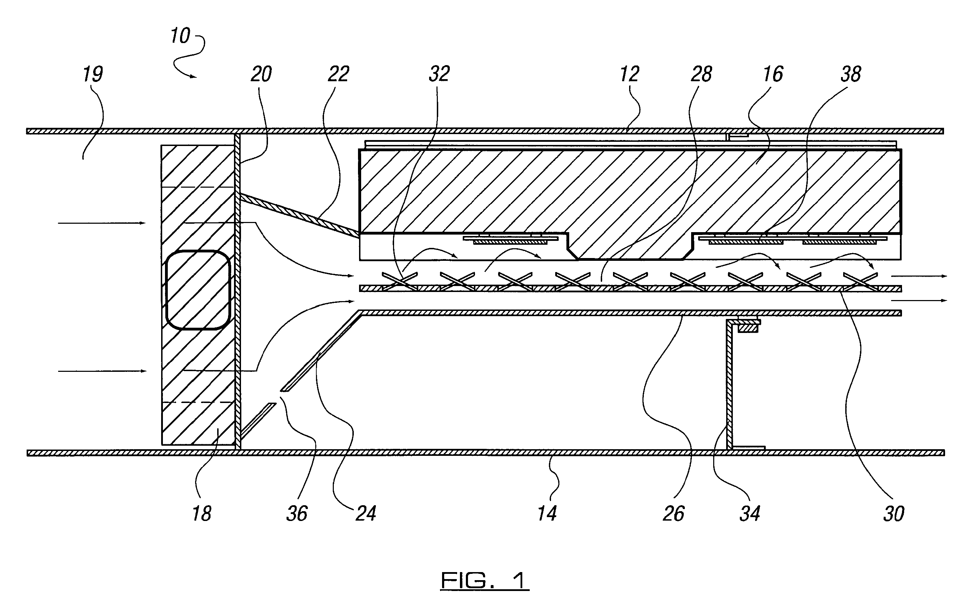

Referring firstly to figure 1, there is shown generally a hard drive enclosure section of an electronic apparatus 10 in the form of a PVR unit. The hard drive enclosure contains HDD 16 disposed between a lid 12 and a base 14. The HDD can be suspended in the housing via a cradle, can be attached directly to the housing and/or the like.

An axial fan 18 is arranged upstream of the HDD such that air from the fan is blown over the HDD 16. The fan 18 is contained within an isolated enclosure or compartment 19 and is mounted between the lid 12 and base 14 of the housing by way of a mounting plate 20. Baffle plates 22 and 24 are provided to direct the airflow from the fan towards the underside of the HDD 16. An upper baffle plate 22 is connected between the fan housing 18 and a side of the HDD, whilst a lower baffle plate 24 is connected between the fan housing and a cowling member 26 such that the baffle plates form a duct such that substantially no air flow is directed over the steel lid of the HDD.

The baffle plates 22 and 24 are angled to form a nozzle arrangement such that the flow area for the air is reduced towards the HDD. Thus the velocity of the air flow underneath the HDD is increased, concentrating the airflow over the HDD. The cowling 26 is arranged substantially parallel to the underside of the HDD so as to form a longitudinal channel 28 through which the air from the fan is directed.

The cowling 26 is supported above the base 14 by a member 34 which serves to dampen or prevent vibration of the cowling 26. In addition the member 34 acts as a bulkhead, forming an enclosed chamber between the cowling and the base which can serve as an RF compartment. One or more apertures 36 within the lower baffle plate 24 allow air from the main flow to be bled into the RF compartment at a substantially reduced rate so as to provide a cooling air source for a RF board.

A fin 30 is arranged longitudinally within the channel 28 and in this embodiment is substantially parallel to a base of the HDD. The fin 30 acts as a heat sink and is generally U-shaped with the fin sides extending up the sides of the HDD such that heat is conducted from the sides of the HDD and into the forced air stream. The fin 30 may be made of an aluminium or copper plate which is bolted or otherwise attached to the sides of the HDD to ensure good thermal contact. A material sheet is disposed between the HDD sides and the fin to provide an improved thermal interface.

The HDD body is typically die-cast aluminium alloy, the conductivity of which is exploited by providing a good thermal path away from the HDD body sides, where there is maximum surface area and minimum thermal path to heat generating sources, such as the motor and disk/air friction. The upper surface of the HDD body is generally mild steel, which offers poorer thermal conductivity. In addition the upper surface or lid generally covers an air filled cavity in which the magnetic disk and heads are housed making it unsuitable for efficient heat transfer.

The fin 30 is notched within the channel 28 so as to promote the creation of vortices and hence turbulent air flow. By altering the direction of the air flow in this manner, an increased amount of heat can be convected away from the underside of the HDD and improved cooling efficiency is achieved when compared to an undisturbed air flow in which the bulk flow passes down the centre of the channel. Fingers 32 are punched out of the fin 30 in various orientations to direct the flow towards the underbody of the HDD 16 and the associated control electronics. Furthermore the surface area of the heat sink fin is increased for efficient convection.

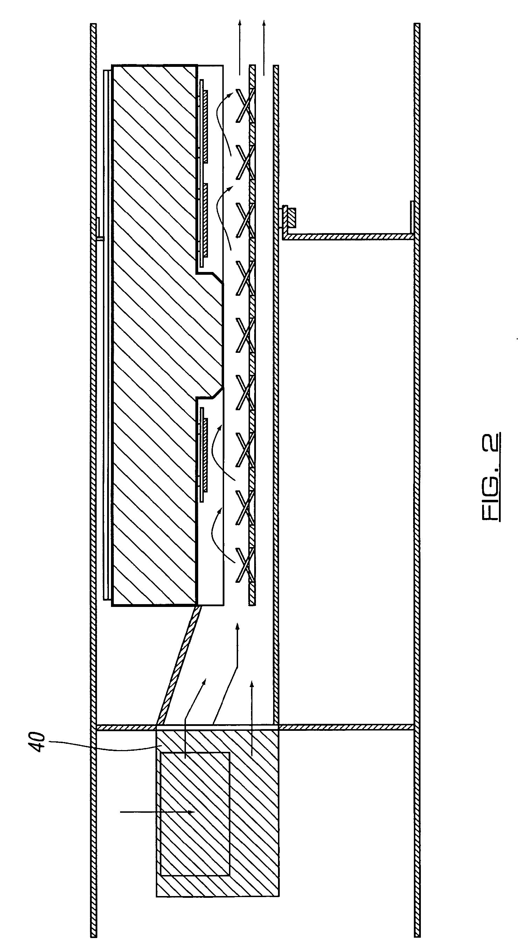

In figure 2, the axial fan has been replaced with a radial fan or blower 40 mounted in fan compartment 19. Thus the fan 40 draws in air in a different direction to the fan of figure 1 but the cooling of the HDD is otherwise performed in the same way as the arrangement of figure 1.

Using a fin 30 made of a 1mm thick aluminium plate bolted to the sides of the HDD with a 0.3mm thermal gap material sheet in combination with the augmented air flow from a 70mm fan has been found to reduce a typical 10°C temperature rise during operation to less than 5°C. It is generally found that by increasing the thickness of the fin to a value of 2mm or more, further improvements in operation and also the stiffness of the assembly can be achieved.

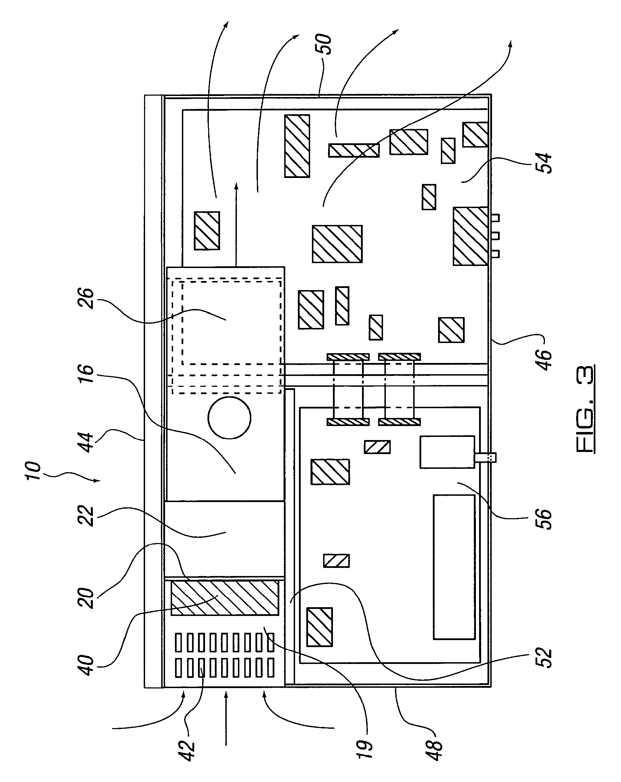

Turning now to figure 3, there is shown a plan view of the cooling arrangement of figure 2 within PVR 10. The PVR has a front facia 44, a rear panel 46 and sides 48 and 50.

The radial fan 40 draws in air from inlet 42 into the fan compartment 19. The inlet 42 takes the form of a number of vent holes extending through the lid 12 and side 48 such that ambient air can be drawn through at least two external surfaces of the PVR 10. In addition, the base 14 may be provided with inlet vents to the fan chamber 19. The set top box may be provided with feet (not shown) such that the base 14 is raised above a supporting surface so as to allow air to pass into the fan chamber from below the PVR.

The fan chamber 19 is positioned in the corner of the set top box and forms an enclosure for the fan 40 defined by the base 14, the lid 12, the front 44 and side 48 of the PVR and the internal walls 20 and 52. By housing the fan in this manner, a constant supply of external ambient air to the fan 40 is ensured and the fan is isolated from recirculating air within the PVR casing.

The air from the fan 40 is then ducted by baffle plates 22 and 24 beneath the HDD 16 as previously described. Upon exiting the channel 28, the exhaust air enters into digital compartment 54 containing a digital board, where a portion of the flow may recirculate so as to cool a power supply unit and other electronic components. In addition, the air bled from the main cooling airflow by way of the apertures 36 shown in figure 1, may pass through RF compartment 56, containing an RF board so as to convect heat from components therein.

By pressurising the set top box, the exhaust air from the HDD assembly can be directed wherever required, such as, for example, underneath PCB's, around heat sink dimples and out through vent holes in the base.

Exhaust vents are provided in the side wall 50 as well as in the lid 12 and base 14 such that air can exit the set top box in multiple directions. The overall area of exhaust ventilation generally exceeds the area of the inlet so as to reduce back pressure and dust accumulation.

It will be appreciated by persons skilled in the art that any or any combination of the above described embodiments can form part of the present invention.

## Claims

1. Electronic apparatus, said apparatus including a housing with one or more electronic devices which act as heat sources and a fan provided therein, the fan being arranged to draw air from outside of the housing via one or more inlets such that said air passes over at least one of said electronic devices prior to exiting said housing via one or more outlets, wherein said housing has multiple sides and an inlet is provided on two or more of said sides.

2. Apparatus according to claim 1 wherein the inlet extends around a corner of said housing.

3. Apparatus according to claim 2 wherein the corner is substantially perpendicular so that air can enter into the housing via the inlet from two substantially perpendicular directions.

4. Apparatus according to claim 1 wherein the inlet includes a plurality of apertures or slots and said apertures or slots extend around one or more corners of said housing.

5. Apparatus according to claim 1 wherein the fan is contained in a fan compartment within said housing and said fan compartment draws air into the fan compartment directly through said inlet.

6. Apparatus according to claim 5 wherein said fan compartment is defined by at least one or more parts of the external housing wall and one or more internal walls.

7. Apparatus according to claim 5 wherein the fan compartment is provided in a corner of the housing.

8. Apparatus according to claim 5 wherein one or more baffle means are associated with said fan compartment such that air leaving said fan compartment is ducted onto one or more electronic devices in said housing.

9. Apparatus according to claim 8 wherein the baffle means are formed so as to restrict the cross sectional area in which the air flows through the housing so as to increase the directed air flow velocity adjacent said one or more electronic devices.

10. Apparatus according to claim 8 wherein the baffle means direct air from the fan compartment and over at least one side of an electronic device in the form of a hard disk drive prior to the air passing over any other electronic devices within said housing.

11. Apparatus according to claim 1 wherein said one or more electronic devices includes a hard disk drive (HDD).

12. Apparatus according to claim 11 air direction means are provided adjacent one or more sides of the HDD and are profiled so as to direct airflow onto one or more sides of the HDD.

13. Apparatus according to claim 12 wherein the air direction means is provided with a plurality of oblique formations thereon so as to promote turbulent air flow adjacent said one or more sides of said HDD.

14. Apparatus according to claim 13 wherein the oblique formations include any or any combination of one or more fingers, protruding members or notches.

15. Apparatus according to claim 11 wherein a fin is attached to one or more sides of the HDD and is thermally conductive to function as a heat sink.

16. Apparatus according to claim 11 wherein a cowling or partition means is provided a spaced distance from a side of the HDD and a fin or air direction means associated with said HDD is disposed in the air flow between the cowling or partition means and the side of the HDD.

17. Apparatus according to claim 8 wherein the baffle means associated with the fan compartment are located externally of said fan compartment and include one or more apertures defined therein, said apertures leading into one or more other chambers within the housing and said other chambers containing one or more further electronic devices.

18. Apparatus according to claim 1 wherein the housing includes one or more outlets to allow air to exit the housing or one or more chambers in said housing.

19. Apparatus according to claim 1 in the form of a set top box or broadcast data receiver.

20. Electronics cooling apparatus for a broadcast data receiver, said apparatus including a fan disposed in fluid communication with a hard disk drive, wherein air driven by the fan is channelled or ducted to one or more surfaces of the hard disk drive, said apparatus including a fin or air direction means disposed adjacent said hard disk drive such that airflow induced by said fan passes over the surface of said hard disk drive and said fin or air direction means.

21. A method of cooling electronics apparatus, said apparatus including a housing with one or more electronic devices which act as heat sources and a fan provided therein, said method including the steps of drawing air from outside of the housing via one or more inlets using a fan such that said air passes over at least one of said electronic devices prior to exiting said housing via one or more outlets, wherein said housing has multiple sides and an inlet is provided on two or more of said sides to allow air to be drawn into said housing from said two or more sides.

22. A method of cooling electronics apparatus, said apparatus including a fan disposed in fluid communication with a hard disk drive and said method including the steps of driving air using the fan through a channel or duct to one or more surfaces of the hard disk drive, said apparatus including a fin or air direction means disposed adjacent said hard disk drive such that the driven airflow induced by said fan passes over the surface of said hard disk drive and said fin or air direction means.
